# FASCICULE DE BREVET EUROPEEN

(11) **EP 0 465 288 B1**
(45) Date de publication et mention de la délivrance du brevet: **01.09.1993**
(21) Numéro de dépôt: 91401619.1
(22) Date de dépôt: 17.06.1991
(51) Int. Cl.: B60N 3/04

(54) **Dispositif de fixation de plaques de revêtement sur un support et assemblage obtenu à l'aide de ce dispositif**
Vorrichtung zum Befestigen von Beschichtungsplatten auf einer Unterlage und mit Hilfe dieser Vorrichtung erhaltene Anordnung
Device for fastening covering plates on a support and assembly obtained by this device

(30) Priorité: 04.07.1990 FR 9008492
(43) Date de publication de la demande: 08.01.1992
(73) Titulaire: AUTOMOBILES PEUGEOT, 75116 Paris (FR); AUTOMOBILES CITROEN, 92200 Neuilly-sur-Seine (FR)
(72) Inventeur: Bondu, Jacques, F-91430 Igny (FR)
(74) Mandataire: Durand, Yves Armand Louis

(56) Documents cités:
- EP-A- 0 153 489
- EP-A- 0 188 639
- DE-A- 3 517 620
- FR-A- 2 559 559

## Description

La présente invention a essentiellement pour objet un dispositif de fixation de plaques de revêtement sur un support pouvant lui aussi présenter la forme d'une plaque tel que défini dans le préambule de la revendication 1. Un tel dispositif est connu, par exemple, par le document EP-A-0 153 489 ou FR-A-2 559 559.

Elle vise également un assemblage de plaques de revêtement sur un support, obtenu à l'aide de ce dispositif.

On a déjà proposé divers types d'agrafes pour fixer une plaque de matériau insonorisant et un tapis sur le tablier d'un véhicule automobile.

Toutefois, ces agrafes étaient généralement mises en place une fois le tapis posé sur la plaque de matériau insonorisant elle-même reposant sur le tablier. Dès lors, la plaque de matériau insonorisant, avant mise en place et fixation du tapis, n'était pas dès le départ positionnée ni fixée de façon positive sur le tablier du véhicule en cours de fabrication, ce qui rendait difficile le montage des organes venant se fixer sur ladite plaque, sans parler du fait que cette plaque n'assurait pas toujours une fonction acoustique correcte.

La présente invention a pour but de remédier notamment aux inconvénients ci-dessus en proposant un dispositif de fixation permettant à la plaque de matériau insonorisant de se trouver plus facilement et correctement positionnée après sa pose sur le tablier, et d'être fixée de façon positive et permanente sur ledit tablier, tandis que, par la suite, le tapis recouvrant ladite plaque pourra lui aussi être correctement positionné et fixé.

A cet effet, l'invention a pour objet un dispositif de fixation d'éléments superposés formant plaques de revêtement, sur un support pouvant lui aussi présenter la forme d'une plaque, ce dispositif étant du type comprenant un corps emmanché par pression sur une tige ou analogue solidaire du support, caractérisé en ce que ledit corps se compose de deux pièces tubulaires coaxiales possèdant des diamètres différents et séparées par une collerette qui les réunit, la pièce tubulaire interne comportant à son extrémité opposée à celle reçue dans ladite tige un orifice apte à recevoir une agrafe de verrouillage.

Suivant une autre caractéristique de ce dispositif, la pièce tubulaire interne comportant l'orifice précité fait saillie du plan de la collerette pour définir avec elle une gorge.

On précisera ici que la collerette précitée prenant naissance sur la périphérie de la pièce tubulaire interne et raccordée à l'une des extrémités de la pièce tubulaire externe s'étend radialement au-delà de cette dernière.

Suivant une autre caractéristique de l'invention, la pièce tubulaire interne est intérieurement pourvue d'ailettes radiales coopérant avec la tige précitée et éventuellement avec l'agrafe de verrouillage.

Suivant un mode de réalisation préféré, cette agrafe de verrouillage se compose d'une platine ou analogue bombée et munie en son centre d'un pion à extrémité conique pouvant être monté par clippage dans l'orifice précité de la pièce tubulaire interne.

Cet orifice présente avantageusement une forme sensiblement conique pour permettre l'accrochage d'un épaulement prévu au niveau de l'extrémité conique du pion de l'agrafe de verrouillage.

L'invention vise également un assemblage de plaques de revêtement sur un support, réalisé à l'aide du dispositif répondant à l'une ou l'autre des caractéristiques ci-dessus.

L'invention apparaîtra mieux dans la description détaillée qui suit et se réfère aux dessins annexés, donnés uniquement à titre d'exemple, et dans lesquels.

La figure 1 est une vue éclatée et en coupe d'un dispositif de fixation conforme à cette invention.

La figure 2 est une vue en coupe suivant la ligne II-II de la figure 1.

La figure 3 est une vue en coupe d'un support sur lequel sont fixés successivement une plaque de matériau insonorisant et un tapis, à l'aide du dispositif selon l'invention.

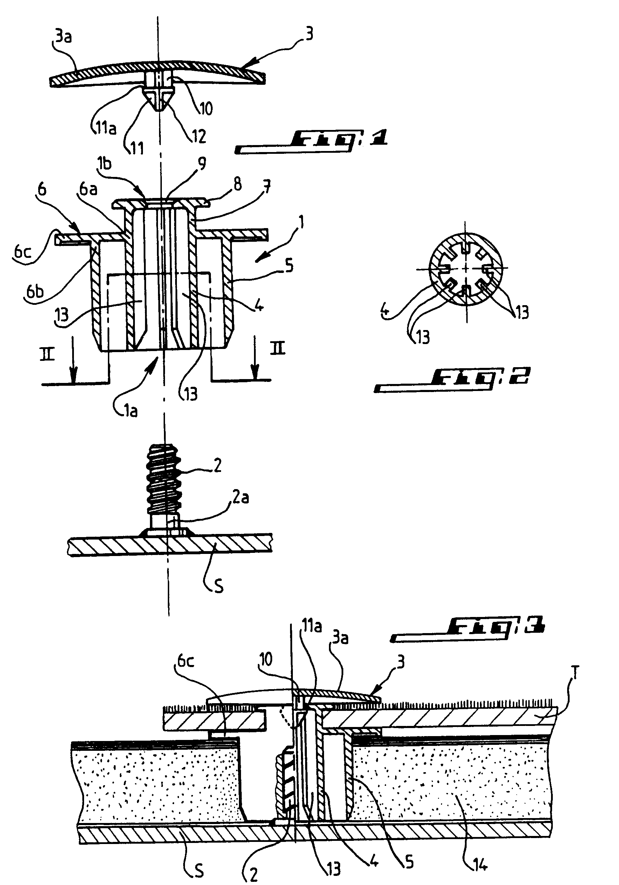

Comme on le voit bien sur les figures 1 et 3, ce dispositif comprend essentiellement un corps 1 dont une extrémité la peut être emmanchée par pression ou à force sur une tige 2 solidaire d'un support S, et dont l'autre extrémité 1b peut recevoir une agrafe 3 destinée à être verrouillée ou clippée dans ladite extrémité 1b comme on le décrira en détail plus loin.

Le corps 1 forme une pièce unique réalisée par moulage par exemple et se composant essentiellement de deux pièces tubulaires coaxiales possédant des diamètres différents, et à savoir une pièce tubulaire interne 4 et une pièce tubulaire externe 5.

Ces deux pièces tubulaires interne 4 et externe 5 sont séparées par une collerette 6 qui les réunit. On voit sur la figure 1 que la collerette 6 prend naissance en 6a sur la périphérie de la pièce tubulaire interne 4, est raccordée en 6b à l'une des extrémités de la pièce tubulaire externe 5 et s'étend radialement au-delà de ladite pièce tubulaire externe 5, comme on l'a repéré en 6c.

L'extrémité 1b de la pièce tubulaire interne 4 fait saillie du plan de la collerette 6 pour définir avec celle-ci une gorge 7. Plus précisément, cette gorge 7 est délimitée par la collerette 6 et par un rebord annulaire 8 prévu au niveau de l'extrémité 1b du corps 1, constituée par l'extrémité de la pièce tubulaire interne 4.

Cette extrémité 1b comporte un orifice 9 qui, suivant l'exemple représenté, présente une forme sensiblement conique, ledit orifice étant apte à permettre le clippage ou le verrouillage de l'agrafe 3.

Cette agrafe 3 comprend une platine ou analogue bombée 3a au centre de laquelle fait saillie un pion 10 comportant une extrémité conique 11 susceptible de pénétrer dans l'orifice 9 de l'extrémité 1b de la pièce tubulaire interne 4.

Le pion 10, suivant l'exemple représenté comporte un épaulement annulaire 11a susceptible de s'accrocher sur l'extrémité 1b après passage au travers de l'orifice 9, et ce pion 10 peut encore comporter des petites nervures que l'on a repérées en 12 sur la figure 1.

Dans la pièce tubulaire interne 4, et comme on le voit bien sur la figure 2, sont prévues des ailettes radiales 13 s'étendant sur toute la hauteur de ladite pièce 4 et susceptibles de coopérer avec la tige 2 et éventuellement avec le pion 10 de l'agrafe 3.

Suivant l'exemple de réalisation représenté, la tige 2 revêt la forme d'une tige filetée susceptible de s'accrocher aux ailettes 13 et soudée par sa tête 2a sur le support S.

Mais, pour une meilleure compréhension de l'invention, on décrira ci-après comment on fixe des plaques de revêtement sur le support S à l'aide du dispositif qui vient d'être décrit, en se reportant plus particulièrement à la figure 3.

Une plaque 14, telle que par exemple une plaque de matériau insonorisant est déposée sur le support S constitué par exemple par la tôle du tablier d'un véhicule.

Ensuite, le corps 1, par sa pièce tubulaire interne 4 est emmanché à force sur la tige filetée 2. A ce stade, il est important de remarquer que, grâce au corps 1, la plaque 14 sera maintenue et fixée positivement contre le support S, et cela en particulier grâce à la pièce tubulaire externe 5 et au bord 6a de la collerette 6. Ainsi, on pourra commodément fixer sur la plaque 14 tout organe désiré, tel que des câbles par exemple, sans risque de provoquer un déplacement intempestif de ladite plaque par rapport au support S.

Ensuite, un tapis T est déposé sur la plaque 14 et ce tapis est automatiquement et correctement positionné, grâce à la gorge 7 du corps 1.

Ensuite, l'agrafe 3 est montée par clippage ou analogue dans l'orifice 9 de la pièce tubulaire interne 4, de sorte que l'ensemble plaque 14 - tapis T est correctement maintenu contre le support S et cela sans risque de déplacements relatifs.

On a donc réalisé suivant l'invention un dispositif de fixation de plusieurs éléments ou plaques superposées et positivement maintenues séparément, de sorte que des interventions sont permises sur chaque plaque séparément, avant leur assemblage, et cela sans risque de provoquer un déplacement des plaques par rapport à leur support, ce qui serait préjudiciable à l'assemblage.

## Revendications

1. Dispositif de fixation d'éléments superposés formant plaques de revêtement, sur un support pouvant lui aussi présenter la forme d'une plaque, ce dispositif étant du type comprenant un corps (1) emmanché par pression sur une tige ou analogue (2) solidaire du support (S), caractérisé en ce que ledit corps se compose de deux pièces tubulaires (4, 5) coaxiales possédant des diamètres différents et séparées par une collerette (6) qui les réunit, la pièce tubulaire interne (4) comportant à son extrémité (1b) opposée à celle (1a) reçue dans ladite tige (2), un orifice (9) apte à recevoir une agrafe de verrouillage (3).

2. Dispositif selon la revendication 1, caractérisé en ce que l'extrémité (1b) de la pièce tubulaire interne (4) comportant l'orifice précité (9) fait saillie du plan de la collerette (6) pour définir avec celle-ci une gorge (7).

3. Dispositif selon la revendication 1 ou 2, caractérisé en ce que la collerette précitée (6) prenant naissance sur la périphérie de la pièce tubulaire interne (4) et raccordée à l'une des extrémités de la pièce tubulaire externe (5) s'étend radialement au-delà de cette dernière.

4. Dispositif selon l'une des revendications 1 à 3, caractérisé en ce que la pièce tubulaire interne (4) est intérieurement pourvue d'ailettes radiales (13) coopérant avec la tige précitée (2) et éventuellement avec l'agrafe de verrouillage (3).

5. Dispositif selon l'une des revendications 1 à 4, caractérisé en ce que l'agrafe de verrouillage précitée (3) se compose d'une platine ou analogue (3a) bombée et munie en son centre d'un pion (10) à extrémité conique (11) pouvant être monté par clippage dans l'orifice précité (9) de la pièce tubulaire interne (4).

6. Dispositif selon l'une des revendications précédentes, caractérisé en ce que l'orifice précité (9) présente une forme sensiblement conique pour permettre l'accrochage d'un épaulement (11a) prévu au niveau de l'extrémité conique (11) du pion (10) de l'agrafe de verrouillage (3).

7. Assemblage de plaques de revêtement sur un support, caractérisé en ce qu'il est réalisé à l'aide du dispositif selon l'une des revendications 1 à 6.

## Patentansprüche

1. Vorrichtung zur Befestigung von Auskleidungsplatten bildenden übereinander gelagerten Elementen an eine Tragunterlage, die selber ebenfalls die Gestalt einer Platte aufweisen kann, wobei diese Vorrichtung der auf einen mit der Tragunterlage (S) fest verbundenen Stift oder dergleichen (2) unter Druck aufgepressten Körper (1) aufweisenden Gattung ist, dadurch gekennzeichnet, dass der besagte Körper sich aus zwei unterschiedliche Durchmesser besitzenden und durch einen Flansch (6), der sie vereinigt, getrennten koaxialen rohrförmigen Werkstücken (4,5) zusammensetzt, wobei das innere rohrförmige Werkstück (4) an seinem dem in dem besagten Stift (2) aufgenommenen Ende (1a) entgegengesetzten Ende (Ib) eine zur Aufnahme einer Verriegelungsklammer (3) geeignete Oeffnung (9) aufweist.

2. Vorrichtung nach Anspruch 1, dadurch gekennzeichnet, dass das die vorgenannte Oeffnung (9) aufweisende Ende (1b) des inneren rorhförmigen Werkstücks (4) aus der Ebene des Flansches (6) hervorragt, um mit diesem eine Nut (7) abzugrenzen.

3. Vorrichtung nach Anspruch 1 oder 2, dadurch gekennzeichnet, das der von dem Umfang des inneren rohrförmigen Werkstückes (4) ausgehende und an einem der Enden des äusseren rohrförmigen Werkstückes (5) angeschlossene vorgenannte Flansch (6) sich über dieses letztere hinaus radial erstreckt.

4. Vorrichtung nach einem der Ansprüche 1 bis 3, dadurch gekennzeichnet, dass das innere rohrförmige Werkstück (4) innen mit mit dem vorgenannten Stift (2) und gegebenenfalls mit der Verriegelungsklammer (3) zusammenwirkenden radialen Rippen (13) versehen ist.

5. Vorrichtung nach einem der Ansprüche 1 bis 4, dadurch gekennzeichnet, dass die vorgenannte Verriegelungsklammer (3) aus einem gewölbten und in seinem Mittelpunkt mit einem Zapfen (10) mit kegelförmigem Ende (11) versehenen Plättchen oder dergleichen (3a) besteht, der durch Einklemmen in die vorgenannte Oeffnung (9) des inneren rohrförmigen Werkstückes (4) eingesetzt werden kann.

6. Vorrichtung nach einem der vorangehenden Ansprüche, dadurch gekennzeichnet, dass die vorgenannte Oeffnung (9) eine etwa kegelförmige Gestalt aufweist, um das Anhacken an einer in Höhe des kegelförmigen Endes (11) des Zapfens (10) der Verriegelungsklammer (3) vorgesehenen Schulter (11a) zu gestatten.

7. Zusammenbau von Auskleidungsplatten an einer Tragunterlage, dadurch gekennzeichnet, dass er mit Hilfe der Vorrichtung nach einem der Ansprüche 1 bis 6 durchgeführt wird.

## Claims

1. Device for fastening superimposed elements forming lining plates onto a support which itself too may exhibit the shape of a plate, this device being of the type comprising a body (1) fitted under pressure onto a rod or the like (2) made fast to the support (S), characterized in that the said body consists of two coaxial tubular parts (4, 5) having different diameters and separated by a flange (6) which is joining them, the internal tubular part (4) comprising at its end (1b) opposite to that (1a) received into the said rod (2), an opening (9) adapted to receive a locking fastener (3).

2. Device according to claim 1, characterized in that the end (1b) of the internal tubular part (4) comprising the aforesaid opening (9) is projecting from the plane of the flange (6) to define a groove (7) therewith.

3. Device according to claim 1 or 2, characterized in that the aforesaid flange (6) having its root on the periphery of the internal tubular part (4) and connected to one of the ends of the external tubular part (5) extends radially beyond the latter.

4. Device according to one of claims 1 to 3, characterized in that the internal tubular part (4) is provided inside with radial fins (13) co-operating with the aforesaid rod (2) and possibly with the locking fastener (3).

5. Device according to one of claims 1 to 4, characterized in that the aforesaid said locking fastener (3) consists of a bulged plate or the like (3a) provided at its center with a stud (10) with a tapering end (11) likely to be mounted through clipping into the aforesaid opening (9) of the internal tubular part (4).

6. Device according to one of the foregoing claims, characterized in that the aforesaid opening (9) exhibits a substantially tapered shape to permit the hooking onto a shoulder (11a) provided at the level of the tapered end (11) of the stud (10) of the locking fastener (3).

7. Assembly of lining plates onto a support, characterized in that it is carried out with the assistance of the device according to one of claims 1 to 6.
